(19) Europäisches Patentamt
European Patent Office
Office européen des brevets

(11) EP 3 805 988 A1

(12) EUROPEAN PATENT APPLICATION
published in accordance with Art. 153(4) EPC

(43) Date of publication:
14.04.2021 Bulletin 2021/15

(51) Int Cl.:
**G06K 9/62** (2006.01)

(21) Application number: 19810192.5

(22) Date of filing: 29.04.2019

(86) International application number:
PCT/CN2019/084946

(87) International publication number:
WO 2019/228122 (05.12.2019 Gazette 2019/49)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 29.05.2018 CN 201810530822

(71) Applicant: TENCENT TECHNOLOGY (SHENZHEN) COMPANY LIMITED
Shenzhen, Guangdong 518057 (CN)

(72) Inventors:
• LI, Anping
  Shenzhen, Guangdong 518057 (CN)
• LI, Shaoxin
  Shenzhen, Guangdong 518057 (CN)
• CHEN, Chao
  Shenzhen, Guangdong 518057 (CN)
• SHEN, Pengcheng
  Shenzhen, Guangdong 518057 (CN)
• WU, Shuang
  Shenzhen, Guangdong 518057 (CN)
• LI, Jilin
  Shenzhen, Guangdong 518057 (CN)

(74) Representative: Eisenführ Speiser
Patentanwälte Rechtsanwälte PartGmbB
Postfach 31 02 60
80102 München (DE)

(54) **TRAINING METHOD FOR MODEL, STORAGE MEDIUM AND COMPUTER DEVICE**

(57) The present application relates to a training method for a model, the method comprising: reading a current group of training samples, which is determined on the basis of a training set; acquiring a first sample characteristic of each training sample in the current group of training samples by means of a model to be trained, and acquiring a central characteristic respectively corresponding to each training sample on the basis of the classification category to which each training sample belongs and each first sample characteristic; acquiring a characteristic distribution parameter corresponding to each training sample, wherein the characteristic distribution parameter corresponding to each training sample is acquired by statistically analyzing a second sample characteristic of each training sample which belongs to the classification category of each training sample in the training set, and the second sample characteristics of the training samples being outputted by a trained model on the basis of each training sample; acquiring a comprehensive loss parameter corresponding to the current group of training samples on the basis of each central characteristic and each characteristic distribution parameter, and adjusting the model parameters of the model to be trained on the basis of the comprehensive loss parameter. The solution provided by the present application may improve the training efficiency of models.

```
                                              ┌─ S202
┌──────────────────────────────────────────┐
│ Read a current group of training samples,  │
│ where the current group of training samples│
│ is determined based on a training set      │
└──────────────────────────────────────────┘
                    │
                    ▼                         ┌─ S204
┌──────────────────────────────────────────┐
│ Obtain a first sample feature of each      │
│ training sample in the current group of    │
│ training samples based on a to-be-trained  │
│ model, and obtain a corresponding center   │
│ feature based on the first sample feature  │
│ and a classification category to which said│
│ training sample belongs                    │
└──────────────────────────────────────────┘
                    │
                    ▼                         ┌─ S206
┌──────────────────────────────────────────┐
│ Obtain a feature distribution parameter    │
│ corresponding to each training sample in   │
│ the current group of training samples,     │
│ where the corresponding feature            │
│ distribution parameter is obtained by      │
│ performing statistics on a second sample   │
│ feature of each training sample that is in │
│ the training set and belongs to the same   │
│ classification category as said training   │
│ sample, and where the second sample        │
│ feature of each training sample is outputted│
│ based on such training sample by a trained │
│ model                                      │
└──────────────────────────────────────────┘
                    │
                    ▼                         ┌─ S208
┌──────────────────────────────────────────┐
│ Obtain a comprehensive loss parameter      │
│ corresponding to the current group of      │
│ training samples, based on all center      │
│ features and all feature distribution      │
│ parameters, and adjust a model parameter   │
│ of the to-be-trained model based on the    │
│ comprehensive loss parameter               │
└──────────────────────────────────────────┘
```

Figure 2

**Description**

RELATED APPLICATION

This application claims priority to Chinese Patent Application No. 2018105308229, entitled "METHOD AND APPARATUS FOR TRAINING MODEL, STORAGE MEDIUM, AND COMPUTER DEVICE" filed on May 29, 2018, which is incorporated by reference in its entirety.

FIELD OF THE TECHNOLOGY

The present disclosure relates to the field of computer technology, and in particular, to a method for model training, a computer-readable storage medium, and a computer device.

BACKGROUND OF THE DISCLOSURE

With development of artificial intelligence (AI) technologies, various classification tasks, such as image classification tasks, speech classification tasks, and text classification tasks, may all be implemented via machine learning models. Before executing an actual classification task, it is necessary to perform model training to obtain a machine learning model with a corresponding classification capability.

A training set is first obtained in a conventional method for model training. The training set includes training samples with category labels, and the category labels are configured to represent actual classification results of the training samples. Then, the training samples are inputted into a to-be-trained model. The to-be-trained model obtains model prediction results for the training samples independently, adjusts a model parameter of the to-be-trained model through multiple iterations according to a difference between the model prediction results and the category labels of the training samples, and stops training when a stop-training condition is met. The conventional training method is time-consuming and inefficient.

SUMMARY

In view of the above, a method for model training, a computer-readable storage medium, and a computer device are provided to address the issue of inefficient training in conventional technology.

A method for model training is provided, including:

retrieving a current group of training samples, where the current group of training samples is determined based on a training set;

obtaining a first sample feature of each training sample in the current group of training samples based on a to-be-trained model, and obtaining a center feature corresponding to each training sample in the current group of training samples, based on the first sample feature and a classification category to which said training sample belongs;

obtaining a feature distribution parameter corresponding to each training sample in the current group of training samples, where the corresponding feature distribution parameter is obtained by performing statistics on a second sample feature of each training sample that is in the training set and belongs to the same classification category as said training sample, and where the second sample feature of each training sample is outputted based on said sample by a trained model; and

obtaining a comprehensive loss parameter corresponding to the current group of training samples, based on all center features and all feature distribution parameters, and adjusting a model parameter of the to-be-trained model based on the comprehensive loss parameter.

A apparatus for model training is provided, including:

a training sample retrieving module, configured to retrieve a current group of training samples, where the current group of training samples is determined based on a training set;

a center feature obtaining module, configured to: obtain a first sample feature each training sample in the current group of training samples, based on a to-be-trained model; and obtain a center feature corresponding to each training sample in the current group of training samples, based on the first sample feature and a classification category to which said training sample belongs;

a distribution parameter obtaining module, configured to: obtain a feature distribution parameter corresponding to each training sample in the current group of training samples; where the corresponding feature distribution parameter is obtained by performing statistics on a second sample feature of each training sample that is in the training set and belongs to the same classification category as said training sample, and where the second sample feature of each training sample is outputted based on said sample by a trained model; and

a model parameter adjustment module, configured to obtain a comprehensive loss parameter corresponding to the current group of training samples, based on all center features and all feature distribution parameters, and adjust a model parameter of the to-be-trained model based on the comprehensive loss parameter.

A computer-readable storage medium is provided, storing a computer program, where the computer program when being executed by a processor configures the processor to perform the foregoing method for model training.

A computer device is provided, including a memory and a processor, where the memory stores a computer program, and the processor performs the foregoing method for model training.

BRIEF DESCRIPTION OF THE DRAWINGS

Figure 1 is a diagram of an application environment of a method for model training according to an embodiment;

Figure 2 is a schematic flowchart of a method for model training according to an embodiment;

Figure 3 is a schematic flowchart of a method for model training according to an embodiment;

Figure 4 is a schematic diagram of components for implementing a method for model training according to an embodiment;

Figure 5 is a simplified schematic flowchart of a method for model training according to an embodiment;

Figure 6 is a schematic diagram of curves of loss parameters according to an embodiment;

Figure 7 is a schematic diagram of curves of hit rates according to an embodiment;

Figure 8 is a structural block diagram of an apparatus for model training according to an embodiment;

Figure 9 is a structural block diagram of a computer device according to an embodiment; and

Figure 10 is a structural block diagram of a computer device according to an embodiment.

DESCRIPTION OF EMBODIMENTS

Hereinafter the present disclosure is further illustrated in detail in conjunction of the drawings and the embodiments, to make objectives, technical solutions, and advantages of the present disclosure clearer. Specific embodiments described herein are merely intended to explain the present disclosure, instead of limiting the present disclosure.

Terms "first", "second", and the like used in the present disclosure are intended to distinguish similar objects in name, and the objects are not limited by such terms. It is understood that the terms are interchangeable in a suitable case without departing from the scope of the present disclosure. For example, "first loss parameter" may be described as "second loss parameter", and similarly, "second loss parameter" may be described as "first loss parameter".

Moreover, the terms "include", "comprise", "have", and any variants thereof are intended to cover a non-exclusive inclusion. For example, a process, a method, a system, a product, or a device that includes a series of steps or elements may not only include such steps or elements that are clearly listed, and may further includes other steps or elements that are not expressly listed or that are inherent to the process, the method, the product, or the device.

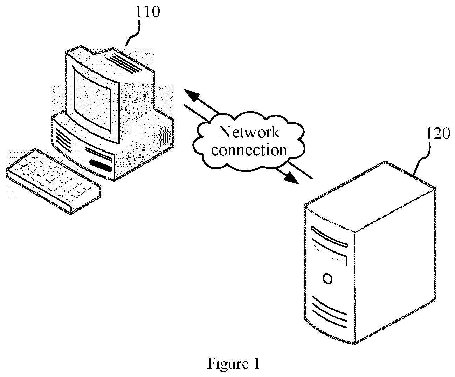

A method for model training according to an embodiment of the present disclosure may be applied to an application environment as shown in Figure 1. The application environment may involve a terminal 110 and a server 120. The terminal 110 and the server 120 may be connected via a network. In a specific embodiment, a training set on the terminal 110 may be uploaded to the server 120, and then the server 120 may train a to-be-trained model based on training samples in the training set. Alternatively, a training set on the server 120 may be delivered to the terminal 110, and then the terminal 110 may train a to-be-trained model based on training samples in the training set. It is appreciated that a terminal may upload a training sample to the server 120, and the server 120 may establish a training set based on the training samples uploaded by multiple terminals.

The present disclosure is not limited to the application environment as shown in Figure 1, and may be applied to any suitable application environment. In another exemplary application environment, the server 120 shown in Figure 1 may not be involved, and the terminal 110 directly trains the to-be-trained model based on training samples in a local training set.

In addition, the terminal 110 may be a desktop terminal or a mobile terminal. The desktop terminal may include a desktop computer or the like. The mobile terminal may include at least one of a mobile phone, a tablet computer, a notebook computer, a personal digital assistant, or a wearable device. The server 120 may be implemented as an independent physical server, or a server cluster that includes multiple physical servers.

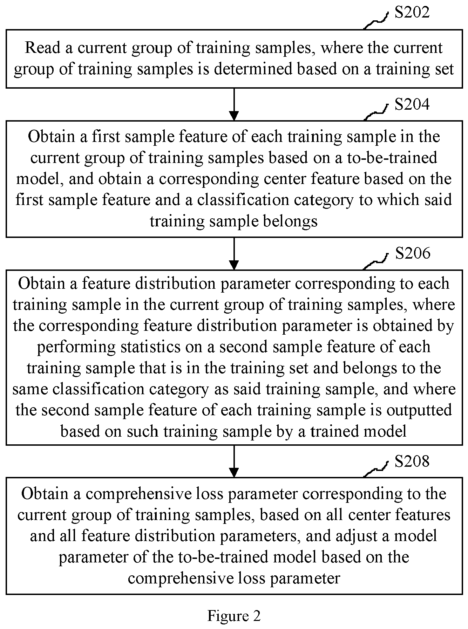

As shown in Figure 2, a method for model training is provided according to an embodiment. Hereinafter an example is described, in which the method is applied to a computer device (for example, the terminal 110 or the server 120 in Figure 1). The method may include steps S202 to S208.

In step S202, the computer device retrieves a current group of training samples, where the current group of training samples is determined based on a training set.

The training set, also known as a training dataset, includes training samples required for training a to-be-trained model. The training sample has been marked with a classification category to which it actually belongs. In a specific embodiment, the training sample is provided with a category label, and the category label is configured to represent the classification category to which the corresponding training sample actually belongs. The category label may be determined through human analysis, for example, determined by a specialist in the art.

Different training samples may be used for different classification tasks. For example, training samples may be image samples for an image classification task. In a specific embodiment, training samples may be face image samples for a face recognition task. Training samples may be audio samples for an audio classification task, and may be text samples for a text classification task.

The current group of training samples includes training samples required for a current adjustment of a model parameter. Generally, the model parameter may be subject to multiple adjustments, in order to complete training of the to-be-trained model. During the training of the to-be-trained model, each time the current group of training samples is retrieved, the model parameter of the to-be-trained model may be adjusted once accordingly.

In an embodiment, the current group of training samples is determined based on the training set, and the current group of training samples may include a part of the training samples in the training set. In such case, the training set is divided into several groups of training samples (also known as several sample data blocks), and each group of training samples includes more than one training sample. Then, each time the model parameter of the to-be-trained model needs to be adjusted, one of the groups of training samples is first selected as the current group of training samples, and then the model parameter of the to-be-trained model is adjusted once based on the current group of training samples. A quantity of training samples included in each group of training samples may be determined based on an actual requirement or human experience. For example, a training set Sett1 including 5000 image samples may be divided into 100 groups of image samples, and each group of image samples includes 50 image samples.

In another embodiment, the current group of training samples may include all training samples in the training set. That is, the current group of training samples is the complete training set.

Generally, in a case that the training set includes a large quantity of training samples, the training set is divided into several groups of training samples. Each time a group of training samples is retrieved, the model parameter of the to-be-trained model is adjusted once based on the group of training samples. In a case that the training set includes a small quantity of training samples, the training set may not be divided. Each time the complete training set is retrieved, the model parameter of the to-be-trained model is adjusted once based on the training set.

The current group of training samples may be retrieved by inputting each training sample in the current group of training samples into the to-be-trained model. In a specific embodiment, the training samples may be sequentially inputted into the to-be-trained model.

In a case that the training set is divided, one or more groups of training samples obtained through the division may serve as a test set. Thereby, the model can be tested after training, so as determine classification accuracy of the model.

In step S204, the computer device obtains a first sample feature of each training sample in the current group of training samples, based on a to-be-trained model, and obtains a center feature corresponding to each training sample in the current group of training samples, based on the first sample feature and a classification category to which said training sample belongs.

The to-be-trained model may be a machine learning model on which model training is to be performed. A purpose of the model training is to enable the to-be-trained model to learn an inherent pattern within the training samples, thereby making the model capable of implementing a corresponding classification task. In a specific embodiment, the model training may include adjusting a model parameter of the to-be-trained model based on training samples.

In a specific embodiment, the to-be-trained model may be a deep learning model in a domain of machine learning models, such as a convolution neural network (CNN). For the deep learning model, there is no need to design, manually based on training samples, a feature inputted into the model. Instead, training samples are directly inputted into the model, and then the deep learning model learns independently based on the training samples and predicts classification categories to which the training samples belong.

A sample feature may be configured to represent a characteristic of a training sample, and the characteristic may serve as a basis for the model predicting the classification category to which the training sample belongs. The first sample feature is obtained based on the training sample based on the to-be-trained model. Each training sample corresponds to one first sample feature.

It is taken as an example that the training samples are image samples. The first sample feature of each image sample inputted into the to-be-trained model may be an image feature, and the image feature is abstracted by the to-be-trained model through processing such as convolution (Convolution), pooling (Pooling), and activation (Relu) on the image sample. In a specific embodiment, the image feature may be a compact feature with a small quantity of dimensions, such as a $1 \times n_d$ feature vector $f = (f_1, \cdots, f_{n_d})$, $n_d$ representing a quantity of feature dimensions.

A center feature may be configured to represent a location of a center among first sample features of training samples that are in the classification category to which a training sample corresponding to the center feature belongs. In an embodiment, the center feature may be a mean substantially.

In this embodiment, each training sample in the current group of training samples corresponds to one center feature. For each training sample, the corresponding center feature may be determined based on the first sample feature of said training sample and the classification category to which said training sample belongs.

In an embodiment, the corresponding center feature may be determined for each training sample as follows. First, a current center feature corresponding to the classification category to which the training sample belongs is determined. The current center feature corresponding to the classification category is determined from first sample features of training samples, which belong to the classification category and are inputted into the to-be-trained model previous to said training sample. Then, the current center feature is updated based on the first sample feature of said training sample, to obtain an updated center feature corresponding to the classification category to which said training sample belongs. The updated center feature serves as the center feature corresponding to said training sample.

A training sample may be the first sample in determining the corresponding center feature, among training samples in the classification category to which the training sample belongs. That is, no center feature has been determined for any training sample in the classification category previous to the training sample. In such case, an initial center feature serves as the obtained current center feature corresponding to the classification category, and a value of the initial center feature is randomly determined in initialization of the center feature. The corresponding center feature of each classification category starts from the initial center feature, is continuously updated based on first sample features of training samples, and gradually approaches a real mean of the training samples that belong to the classification category.

For example, a classification task of a to-be-trained model M1 is to recognize whether a face image is of "Jack", that is, classification categories include "Jack" and "Not Jack". A training set Sett2 includes training samples TS1 to TS6, i.e., a total of six face image samples. The training samples TS1 to TS3 form a group of training samples, and the training samples TS4 to TS6 form another group of training samples. Category labels of the training samples TS1, TS3, TS4, and TS6 represent the classification category "Jack", and category labels of the training samples TS2 and TS5 represent the classification category "Not Jack". (Hereinafter such example is briefly referred to as Example E-1.)

In the first adjustment on the model parameter of the to-be-trained model, the group of training samples that includes the training samples TS1 to TS3 serves as the current group of training samples. First, the to-be-trained model obtains a first sample feature F11 of the training sample TS1. The training sample TS 1 is the first sample in determining the corresponding center feature, among training samples in the classification category "Jack". Therefore, an initial center feature is updated based on the first sample feature F11, and a center feature CF1 is corresponding to the training sample TS1 is obtained after updating. Then, the to-be-trained model obtains a first sample feature F12 of the training sample TS2. The training sample TS2 is the first sample in determining the corresponding center feature, among training samples in the classification category "Not Jack". Therefore, an initial center feature is updated based on the first sample feature F12, and a center feature CF2 corresponding to the training sample TS2 is obtained after updating. Afterward, the to-be-trained model obtains a first sample feature F13 of the training sample TS3. The center feature corresponding to the training sample TS1 that belongs to the same classification category "Jack" has been determined previous to the training sample TS3. Therefore, the center feature CF1 is updated based on the first sample feature F13, and a center feature CF3 corresponding to the training sample TS3 is obtained after updating.

In the second adjustment on the model parameter of the to-be-trained model, the group of training samples that includes the training samples TS4 to TS6 serves as the current group of training samples. First, the to-be-trained model obtains a first sample feature F14 of the training sample TS4. The center feature CF3 is updated based on the first sample feature F14, and a center feature CF4 corresponding to the training sample TS4 is obtained after updating. Then, the to-be-trained model obtains a first sample feature F15 of the training sample TS5. The center feature CF2 is updated based on the first sample feature F15, and a center feature CF5 corresponding to the training sample TS5 is obtained after updating. Afterward, the to-be-trained model obtains a first sample feature F16 of the training sample TS6. The center feature CF4 is updated based on the first sample feature F16, and a center feature CF6 corresponding to the training sample TS6 is obtained after updating. Subsequent adjustments on the model parameter of the to-be-trained model are similar to the foregoing processes, and details are not described again herein.

In a specific embodiment, the current center feature corresponding to the classification category may be updated based on a following equation.

$$C_{y(i)}(t) = (1-\alpha)C_{y(i)}(t-1) + \alpha f_i(t).$$

$y(i)$ represents a classification category to which an $i^{th}$ training sample actually belongs (that is, a classification category represented by a category label of the $i^{th}$ training sample). $C_{y(i)}(t-1)$ represents a center feature corresponding to the classification category $y(i)$ at a moment t-1 (that is, the current center feature corresponding to the classification category $y(i)$), $C_{y(i)}(t)$ represents a center feature corresponding to the classification category $y(i)$ at a moment t (that is, the updated center feature corresponding to the classification category $y(i)$, namely, a center feature corresponding to the $i^{th}$ training sample). $f_i(t)$ represents a first sample feature of the $i^{th}$ training sample at the moment t (that is, a current first sample feature of the $i^{th}$ training sample). $\alpha$ represents an update speed controlling coefficient. Greater $\alpha$ indicates a higher update speed, and smaller $\alpha$ indicates a lower update speed. For example, a value of $\alpha$ may be 0.95.

In step S206, the computer device obtains a feature distribution parameter corresponding to each training sample in the current group of training samples, where the corresponding feature distribution parameter is obtained by performing statistics on a second sample feature of each training sample that is in the training set and belongs to the same classification category as said training sample, and where the second sample feature of each training sample is outputted based on such training sample by a trained model.

The trained model is a machine learning model that has been trained before starting the training of the to-be-trained model, and may be configured to help train the to-be-trained model. Similar to the to-be-trained model, the trained model may be a deep learning model.

In a specific embodiment, a framework of the trained model may be different from that of the to-be-trained model. In an embodiment, a scale parameter of the trained model exceeds that of the to-be-trained model. The scale parameter includes a depth of a model (that is, a quantity of network layers included in a model). In other words, the trained model is larger in scale, higher in complexity, and better in operation performance (for example, classification accuracy), than the to-be-trained model.

In a specific example, both the frameworks of the to-be-trained model and the trained model may be obtained based on the Inception-Resnet framework of Google. The quantity of network layers included in the trained model is 180, and the quantity of network layers included in the to-be-trained model is 80.

The frameworks of the to-be-trained model and the trained model may be obtained based on other model frameworks, such as a Visual Geometry Group (VGG) framework, an InceptionV3 framework, or a DenseNet framework. In addition, an existing model framework may be directly selected as the framework of the trained model based on an actual requirement, or the framework of the trained model may be obtained by improving an existing model framework based on an actual requirement, or the framework of the trained model may be completely obtained through independent design based on an actual requirement. A specific manner is not limited herein.

A second sample feature is outputted by the trained model based on training samples corresponding to the trained model. Each training sample corresponds to one second sample feature. Similar to the aforementioned first sample feature, it is taken as an example that the training samples are image samples. The second sample feature of each image sample that is inputted into the trained model may be an image feature, and the image feature is abstracted by the trained model through processing such as convolution (Convolution), pooling (Pooling), and activation (relu) on the image sample. The image feature may be a compact feature with a small quantity of dimensions, for example, a $1 \times n_d$ feature vector $f = (f_1, \cdots, f_{n_d})$, $n_d$ representing a quantity of feature dimensions.

A feature distribution parameter may be configured to represent a data distribution characteristic of second sample features of all training samples that are in (that is, belong to) the classification category to which a training sample corresponding to the feature distribution parameter belongs. The feature distribution parameter may serve as a supervision signal for training the to-be-trained model. In this embodiment, each classification category corresponds to a feature distribution parameter, and the feature distribution parameter corresponding to a training sample is the feature distribution parameter corresponding to the classification category to which the training sample belongs. Therefore, training samples that belong to a same classification category correspond to a same feature distribution parameter. In addition, the feature distribution parameter corresponding to each training sample is obtained by performing statistics on the second sample features of all training samples that are in the training set and belong to the same classification category as such training sample.

The aforementioned Example E-1 is taken as an example. Each of the two classification categories "Jack" and "Not Jack" corresponds to a feature distribution parameter. It is assumed that the classification category "Jack" corresponds to a feature distribution parameter FD1 and the classification category "Not Jack" corresponds to a feature distribution parameter FD2. On such basis, the feature distribution parameter corresponding to each of the training samples TS1, TS3, TS4, and TS6 is the feature distribution parameter FD1 corresponding to the classification category "Jack", and the feature distribution parameter corresponding to each of the training samples TS2 and TS5 is the feature distribution parameter FD2 corresponding to the classification category "Not Jack".

In an embodiment, the feature distribution parameter may be a Gaussian distribution parameter basically, and may include a mean and a covariance in a specific embodiment. That is, $D_i \sim N(\mu_i, \Sigma_i)$, where $D_i$ represents a feature distribution corresponding to the classification category to which the ith training sample belongs, $\mu_i$ represents a mean obtained by performing statistics on second sample features of all training samples in the classification category to which the ith training sample belongs, $\Sigma_i$ represents a covariance obtained by performing statistics on the second sample features of the all training samples in the classification category to which the ith training sample belongs, and $N(\mu_i, \Sigma_i)$ represents a Gaussian distribution function under the mean $\mu_i$ and the covariance $\Sigma_i$. A data form of the covariance may be a matrix.

In this embodiment, the feature distribution parameter corresponding to each training sample in the current group of training samples may be obtained based on the to-be-trained model, based on a category label of such training sample.

The aforementioned Example E-1 is further taken as an example. First, the trained model obtains second sample features F21 to F26, which correspond to the training samples TS1 to TS6, respectively. Then, statistics are performed on the second sample features F21, F23, F24, and F26 to obtain the feature distribution parameter FD1 corresponding to the classification category "Jack", and statistics are performed on the second sample features F22 and F25 to obtain the feature distribution parameter FD2 corresponding to the classification category "Not Jack". Afterward, in the first adjustment on the model parameter of the to-be-trained model, the group of training samples that includes the training samples TS1 to TS3 serves as the current group of training samples. The to-be-trained model first obtains the feature distribution parameter FD1 corresponding to the training sample TS1 based on the category label of the training sample TS1, obtains the feature distribution parameter FD2 corresponding to the training sample TS2 based on the category label of the training sample TS2, and then obtains the feature distribution parameter FD1 corresponding to the training sample TS3 based on the category label of the training sample TS3. Subsequent adjustments on the model parameter of the to-be-trained model are similar to the foregoing process, and details are not described again herein.

In step S208, the computer device obtains a comprehensive loss parameter corresponding to the current group of training samples, based on all center features and all feature distribution parameters, and adjusts a model parameter of the to-be-trained model based on the comprehensive loss parameter.

The comprehensive loss parameter may serve as a direct basis for the current adjustment on the model parameter. In a specific embodiment, back-propagation may be performed based on the comprehensive loss parameter, so as to adjust the model parameter of the to-be-trained model. In a specific embodiment, the back-propagation may be implemented based on any suitable back-propagation manner, such as batch gradient descent.

The model parameter is a parameter required in model prediction. The model prediction is a process, in which the model predicts for a classification task based on an input of the model and obtains a corresponding prediction result. The model parameter may include a weight parameter of each network layer in the model.

In a specific embodiment, in each adjustment on the model parameter of the to-be-trained model, the model parameter obtained in a previous adjustment is adjusted based on a corresponding comprehensive loss parameter. The model parameter needs to be initialized before training the to-be-trained model, so as to obtain an initial model parameter. Then, in the first adjustment on the model parameter of the to-be-trained model, a comprehensive loss parameter corresponding to the current group of training samples is first obtained, then the initial model parameter is adjusted based on such comprehensive loss parameter, and the model parameter after the first adjustment is obtained. Afterwards, in the second adjustment on the model parameter of the to-be-trained model, a comprehensive loss parameter corresponding to a new current group of training samples is obtained, and then the first adjusted model parameter obtained after the first adjustment is adjusted based on such comprehensive loss parameter, and the model parameters after the second adjustment is obtained. Subsequent adjustments on the model parameter of the to-be-trained model are similar to the foregoing process, and details are not described again herein.

The method for model training according to this embodiment is a model distillation method substantially. Model distillation method teaches a student model via a teacher model, so as to transfer "knowledge" from the teacher model to the student model. Thereby, the student model can approximate the teacher model, as an effect of learning. Generally, the teacher model is a high-precision large-scale model that has been trained, and the student model may be a small-scale model that needs to be trained. Herein the trained model serves as the teacher model, and the to-be-trained model serves as the student model.

The teacher model is not applicable to an embedded device with limited computing capability, due to a large scale, high complexity, and a large computation amount. The student model has a simple structure and low computational complexity, and provides operation performances approximating those of the teacher model after being taught by the teacher model. Therefore, the student model can be widely applied to various embedded devices. Taking face recognition as an example of application, the student model taught by the teacher model can be applied to various scenarios of embedded devices, such as face recognition of a mobile phone, an access control system, and an attendance system.

In model distillation, the teacher model may output a teacher model prediction result for a single training sample, and the teacher model prediction result is inputted into the student model as a supervision signal. The student model obtains a student model prediction result for the single training sample independently. Then, a model parameter of the student model is adjusted based on the student model prediction result and the teacher model prediction result. In such case, an incorrect teacher model prediction result outputted by the teacher model directly results in an incorrect parameter adjustment of the student model. In other words, the student model is weak in resisting against incorrect outputs from the teacher model.

In the method for model training according to embodiments of the present disclosure, the center feature corresponding to a training sample is obtained based on the first sample feature of the training sample and the classification category to which the training sample belongs, and the feature distribution parameter corresponding to the training sample is obtained. The feature distribution parameter is obtained by performing statistics on the second sample feature of each training sample that is in the training set and belongs to the classification category to which the training sample belongs. Then, the model parameter of the to-be-trained model is adjusted based on the center features and the feature distribution parameters. Hence, in comparison with conventional methods in which supervision is only based on a category label, training of the to-be-trained model is supervised based on an output of the trained model, and useful information of the trained model can be transferred into the to-be-trained model, improving training efficiency. In addition, the feature distribution parameter obtained through statistics, instead of a single sample feature outputted by the trained model, serves as a supervision signal. Thereby, an impact of an incorrect output from the trained model is attenuated, and resistance of the to-be-trained model against an incorrect output of the trained model is improved.

In an embodiment, the foregoing step of obtaining the feature distribution parameter corresponding to each training sample in the current group of training samples, that is, step S206, may include a following step. A distribution parameter set is searched based on a category label of said training sample, to obtain the feature distribution parameter corresponding to said training sample. The category label is configured to represent the classification category to which said training sample belongs, and the distribution parameter set includes the feature distribution parameter corresponding to the classification category.

The distribution parameter set is configured to record a feature distribution parameter corresponding to each classification category, and may be utilized when searching for a feature distribution parameter corresponding to a classification category. In a specific embodiment, the distribution parameter set records feature distribution parameters and a correspondence between classification categories and the feature distribution parameters. For example, in the aforementioned Example E-1, a distribution parameter set Sets1 records the feature distribution parameter FD1 corresponding to the classification category "Jack" and the feature distribution parameter FD2 corresponding to the classification category "Not Jack". The distribution parameter set may be a database file substantially.

In this embodiment, the distribution parameter set may be obtained before training the to-be-trained model. In a case that the feature distribution parameter corresponding to a training sample needs to be determined, the distribution parameter set is searched, that is, the distribution parameter set is searched for the feature distribution parameter corresponding to a classification category to which the training sample belongs. In a specific embodiment, the to-be-trained model may initiate a query request to trigger a search operation.

As described above, the category label may be configured to represent a classification category to which a training sample corresponding to the category label belongs. Therefore, the distribution parameter set may be searched based on the category label of the training sample, that is, the distribution parameter set may be searched for a feature distribution parameter corresponding to a classification category represented by the category label. For example, a category label of the aforementioned training sample TS1 represents the classification category "Jack". The distribution parameter set Sets1 is searched based on the category label, for the feature distribution parameter corresponding to the classification category "Jack". The feature distribution parameter FD1 that is found serves as the feature distribution parameter corresponding to the training sample TS1.

A lot of hardware resources, especially a graphic processing unit (GPU) video memory, are occupied, and a long training time is required, in a case that the trained model is at a large scale and both the trained model and the to-be-trained model are simultaneously run during the training of the to-be-trained model. In this embodiment, there is no need to run the trained model when determining a feature distribution parameter corresponding to a training sample in the training of the to-be-trained model. The trained model may output a second sample feature in real time through forward propagation, and it is only required to search the distribution parameter set. Thereby, the occupied hardware resources are greatly reduced, and time is saved in the training.

In an embodiment, obtaining the distribution parameter set may include following steps. Each training sample in the training set is inputted into the trained model. The second sample feature of each training sample in the training set is outputted based on the trained model. Statistics is performed on the second sample features of all training samples that are in the training set and belong to each classification category, to determine the feature distribution parameter corresponding to said classification category. The determined feature distribution parameter corresponding to each classification category is stored, to obtain the distribution parameter set.

In this embodiment, training samples required in the training of the to-be-trained model (that is, training samples in the training set) may be inputted into the trained model before starting the training of the to-be-trained model. Then, the trained model performs feature obtaining processing on the training samples, to obtain and output second sample features corresponding to the training samples, respectively. Afterward, statistics may be performed on the second sample features of the training samples that are in the training set and belong to each classification category, via a corresponding function module running on the computer device, so as to determine the feature distribution parameter corresponding to said classification category. Then, the determined feature distribution parameters are stored, thus obtaining the distribution parameter set.

In an embodiment, the foregoing step of performing statistics on the second sample features of the training samples that are in the training set and belong to each classification category to determine the feature distribution parameter corresponding to said classification category may include following steps. A sample feature mean corresponding to each classification category is determined, where the sample feature mean corresponding to each classification category is a mean of the second sample features of all training samples that are in the training set and belong to said classification category. A sample feature covariance corresponding to each classification category is determined, where the sample feature covariance corresponding to each classification category is a covariance of the second sample features of the training samples that are in the training set and belong to said classification category. The feature distribution parameter corresponding to each classification category is determined based on the sample feature mean and the sample feature covariance that correspond to said classification category.

The sample feature mean is a mean of the second sample features of the training samples that are in the training set and belong to the classification category corresponding to the sample feature mean. A mean may be configured to represent a location of a center of a set of data. Correspondingly, the sample feature mean may be configured to represent a location of a center of the second sample features of the training samples that are in the training set and belong to the classification category corresponding to the sample feature mean.

The sample feature covariance is a covariance of the second sample features of the training samples that are in the training set and belong to the classification category corresponding to the sample feature covariance. A covariance may be configured to represent a degree of dispersion among a set of data. Correspondingly, the sample feature covariance may be configured to represent a degree of dispersion among the second sample features of the training samples that belong to the classification category corresponding to the sample feature covariance.

In this embodiment, the feature distribution parameter corresponding to each classification category is determined based on the sample feature mean and the sample feature covariance that correspond to said classification category. Thereby, the feature distribution parameter corresponding to each classification category includes two parameters, i.e. a mean and a covariance, substantially. That is, a Gaussian distribution is configured to describe a data distribution characteristic of the second sample features of the training samples that belong to the classification category.

In an embodiment, before the foregoing step of obtaining the comprehensive loss parameter corresponding to the current group of training samples based on all center features and all feature distribution parameters, that is, before step S208, the method may further include following steps. For each training sample, a model prediction result is obtained based on the to-be-trained model, based on the corresponding first sample feature. A first loss component corresponding to each training sample is determined based on the model prediction result and the category label of said training sample, where the category label is configured to represent the classification category to which said training sample belongs.

In such case, the foregoing step of obtaining the comprehensive loss parameter corresponding to the current group of training samples based on all center features and all feature distribution parameters may include following steps. A second loss component corresponding to each training sample is determined based on the corresponding center features and the corresponding feature distribution parameter. The comprehensive loss parameter corresponding to the current group of training samples is obtained based on all first loss components and all second loss components.

The model prediction result is a classification category to which a training sample is predicted to belong based on the to-be-trained model. The model prediction result is obtained based on the to-be-trained model based on the training sample. In a case that the model prediction result is consistent with the category label of the training sample, it indicates that the prediction of the to-be-trained model is correct. In case of the two are inconsistent with each other, it indicates that the prediction of the to-be-trained model is incorrect.

The first loss component may be configured to represent a degree of inconsistency between the model prediction result and the category label of the training sample corresponding to the first loss component. Each training sample corresponds to one first loss component. In a specific embodiment, the first loss component corresponding to each training sample may be determined based on the model prediction result of said training sample, the category label of said training sample, and a first loss function. The first loss function may be any suitable loss function. For example, the first loss function may be a Softmax loss function.

In a specific example, the first loss function may be expressed by a following equation. It is noted that a weight matrix of a fully connected layer in the to-be-trained model includes columns that correspond to the classification categories, respectively. For example, in the aforementioned Example E-1, the weight matrix of the fully connected layer in the to-be-trained model includes a column corresponding to the classification category "Jack" and a column corresponding to the classification category "Not Jack".

$$L_{s-i} = -\log \frac{e^{f_i W_{y(i)}^T}}{\sum_{j=1}^{n_c} e^{f_i W_j^T}}$$

$L_{s-i}$ represents the first loss component corresponding to an $i^{th}$ training sample, $f_i$ represents the first sample feature of the $i^{th}$ training sample, $y(i)$ represents the classification category represented by the category label of the $i^{th}$ training sample, $W_{y(i)}^T$ represents an transposed matrix of a column that corresponds to the classification category $y(i)$ in the weight matrix of the fully connected layer of the to-be-trained model, $W_j^T$ represents a transposed matrix of a $j^{th}$ column in the weight matrix of the fully connected layer, and $n_c$ represents a total quantity of the classification categories.

The second loss component may be configured to represent a degree of inconsistency between the center feature of a training sample corresponding to the second loss component and the feature distribution parameter corresponding to the training sample. Each training sample corresponds to one second loss component. In a specific embodiment, the second loss component corresponding to each training sample may be determined based on the center feature corresponding to said training sample, the feature distribution parameter corresponding to said training sample, and a second loss function. The second loss function may be any suitable loss function.

In a specific example, the second loss function may be expressed by a following equation.

$$L_{f-i} = 1.0 - (2\pi)^{-\frac{n_d}{2}} \left| \Sigma_{y(i)} \right|^{-\frac{1}{2}} e^{-\frac{1}{2}[C_{y(i)} - \mu_{y(i)}] \Sigma_{y(i)}^{-1} [C_{y(i)} - \mu_{y(i)}]^T}$$

$L_{f-i}$ represents the second loss component corresponding to an $i^{th}$ training sample, $n_d$ represents a quantity of feature dimensions in the first sample feature of the $i^{th}$ training sample, $\Sigma_{y(i)}$ represents a covariance in the feature distribution parameter corresponding to a classification category $y(i)$, $C_{y(i)}$ represents a center feature corresponding to the $i^{th}$ training sample, and $\mu_{y(i)}$ represents a mean in the feature distribution parameter corresponding to the classification category $y(i)$.

In this embodiment, the first loss component and second loss component corresponding to each training sample are obtained. Then, the comprehensive loss parameter corresponding to the current group of training samples may be determined based on the first loss components and the second loss components of all training samples.

In an embodiment, the foregoing step of obtaining the comprehensive loss parameter corresponding to the current group of training samples based on all first loss components and all second loss components may include following steps. A weighted average is calculated from the first loss components corresponding to all training samples, to obtain a first loss parameter corresponding to the current group of training samples. A weighted average is calculated from the second loss components corresponding to all training samples, to obtain a second loss parameter corresponding to the current group of training samples. The comprehensive loss parameter corresponding to the current group of training samples is obtained based on the first loss parameter and the second loss parameter.

In this embodiment, a weighted average may be calculated from the first loss components corresponding to all training samples in the current group of training samples, to obtain the first loss parameter corresponding to the current group of training samples, after the first loss component and the second loss component corresponding to each training sample in the current group of training samples are obtained. Further, a weighted average may be calculated from the second loss components corresponding to all training sample in the current group of training samples, to obtain the second loss parameter corresponding to the current group of training samples.

In a specific embodiment, the first loss parameter corresponding to the current group of training samples may be determined according to a following equation.

$$L_s = -\frac{1}{n}\sum_{i=1}^{n}\log\frac{e^{f_iW_{y(i)}^T}}{\sum_{j=1}^{n_c}e^{f_iW_j^T}}$$

$L_s$ represents the first loss parameter corresponding to the current group of training samples. n represents a total quantity of training samples in the current group of training samples. $\log\dfrac{e^{f_iW_{y(i)}^T}}{\sum_{j=1}^{n_c}e^{f_iW_j^T}}$ represents the first loss component corresponding to an $i^{th}$ training sample.

The second loss parameter corresponding to the current group of training samples may be determined according to a following equation.

$$L_f = \frac{1}{n}\sum_{i=1}^{n}\left[1.0-(2\pi)^{-\frac{n_d}{2}}\left|\Sigma_{y(i)}\right|^{-\frac{1}{2}}e^{-\frac{1}{2}[C_{y(i)}-\mu_{y(i)}]\Sigma_{y(i)}^{-1}[C_{y(i)}-\mu_{y(i)}]^T}\right]$$

$L_f$ represents the second loss parameter corresponding to the current group of training samples. n represents the total quantity of training samples in the current group of training samples. $\left[1.0-(2\pi)^{-\frac{n_d}{2}}\left|\Sigma_{y(i)}\right|^{-\frac{1}{2}}e^{-\frac{1}{2}[C_{y(i)}-\mu_{y(i)}]\Sigma_{y(i)}^{-1}[C_{y(i)}-\mu_{y(i)}]^T}\right]$ represents the second loss component corresponding to an $i^{th}$ training sample.

In this embodiment, the comprehensive loss parameter corresponding to the current group of training samples may be determined based on both the first loss parameter and the second loss parameter, after the first loss parameter and the second loss parameter corresponding to the current group of training samples are obtained.

In an embodiment, the foregoing step of obtaining the comprehensive loss parameter corresponding to the current group of training samples based on the first loss parameter and the second loss parameter may include following steps. The second loss parameter is multiplied with a first influence coefficient, to determine an influence loss parameter. The comprehensive loss parameter corresponding to the current group of training samples is obtained based on the first loss parameter and the influence loss parameter.

In a specific embodiment, the comprehensive loss parameter corresponding to the current group of training samples may be determined according to a following equation: $L = L_s + \lambda_1 L_f$. L represents the comprehensive loss parameter corresponding to the current group of training samples, $L_s$ represents the first loss parameter corresponding to the current group of training samples, $L_f$ represents the second loss parameter corresponding to the current group of training samples, and $\lambda_1$ represents the first influence coefficient. The first influence coefficient is a hyper-parameter substantially, and is configured to control a proportion of the second loss parameter in the comprehensive loss parameter. A larger first influence coefficient indicates that an output of the to-be-trained model obtained after training is closer to that of the trained model, that is, a higher consistency between the to-be-trained model and the trained model. In a specific embodiment, a value of $\lambda_1$ may be 0.001.

In an embodiment, the foregoing step of obtaining the comprehensive loss parameter corresponding to the current group of training samples based on all first loss components and the second loss component may include following steps. A comprehensive loss component corresponding to each training sample is determined based on the first loss component and the second loss component that correspond to said training sample. A weighted average is calculated from all comprehensive loss components, to obtain the comprehensive loss parameter corresponding to the current group of training samples.

In this embodiment, the comprehensive loss component corresponding to each training sample may be determined based on the first loss component and the second loss component of said training sample, after the first loss component and the second loss component corresponding to each training sample in the current group of training samples are obtained. Each training sample corresponds to one comprehensive loss component. Then, a weighted average is calculated from the comprehensive loss components corresponding to all training samples, to obtain the comprehensive loss parameter corresponding to the current group of training samples.

In a specific embodiment, the comprehensive loss parameter corresponding to the current group of training samples may be determined according to a following equation: $L = \dfrac{1}{n}\sum_{i=1}^{n} L_i$ . $L$ represents the comprehensive loss parameter corresponding to the current group of training samples, n represents the total quantity of training samples in the current group of training samples, and $L_i$ represents the comprehensive loss component corresponding to an $i^{th}$ training sample.

In an embodiment, the foregoing step of determining the comprehensive loss component corresponding to each training sample based on the first loss component and the second loss component that correspond to said training sample may include following steps. A second influence coefficient is multiplied with the second loss component corresponding to each training sample, to determine an influence loss component of said training sample. The comprehensive loss component corresponding to each training sample is obtained based on the first loss component and the influence loss component that correspond to said training sample.

In a specific embodiment, the comprehensive loss component corresponding to each training sample may be determined according to a following equation: $L_i = L_{s\text{-}i} + \lambda_2 L_{f\text{-}i}$. $L_i$ represents the comprehensive loss component corresponding to an $i^{th}$ training sample, $L_{s\text{-}i}$ represents the first loss component corresponding to the $i^{th}$ training sample, $L_{f\text{-}i}$ represents the second loss component corresponding to the $i^{th}$ training sample, and $\lambda_2$ represents the second influence coefficient. Similar to the first influence coefficient, the second influence coefficient is a hyper-parameter substantially, and is configured to control a proportion of the second loss component in the comprehensive loss component. A larger second influence coefficient indicates that an output of the to-be-trained model obtained after training is closer to that of the trained model, that is, a higher consistency between the to-be-trained model and the trained model. In a specific embodiment, a value of $\lambda_2$ may be 0.001.

In an embodiment, after the foregoing step of adjusting the model parameter of the to-be-trained model based on the comprehensive loss parameter, that is, after step S208, the method may further include following steps. In a case that a stop-training condition is not met, a next group of training samples is determined based on the training set, the next group of training samples is determined to be the current group of training samples, and the process returns to the step of retrieving the current group of training samples (that is, returns to the step S202).

The stop-training condition is a condition for terminating the training of the model. The stop-training condition may be set based on an actual requirement. For example, the stop-training condition may be reaching a preset quantity of iterations, or that an indicator of classification performance of the to-be-trained model reaches a preset threshold after the adjusting the model parameter.

Generally, multiple adjustments on the model parameter are required to complete training of the to-be-trained model. On such basis, it may be determined whether the stop-training condition is met, after the model parameter of the to-be-trained model is adjusted based on the comprehensive loss parameter. In a case that the stop-training condition is not met, which indicates that the training needs to be continued, a next group of training samples may be determined based on the training set, and serves as the current group of training samples. The method for model training according to any embodiment of the present disclosure is performed again (for example, steps S202 to S208 are performed again). In a case that the stop-training condition is met, which indicates that no further training is required, the training process may be terminated.

The next group of training samples may be a group of training samples in the training set, and may be located after the current group of training samples. For example, a training set Sett3 is divided into five groups of training samples arranged in sequence (from G1 to G5). During an adjustment on the model parameter of the to-be-trained model, G1 serves as the current group of training samples. After the model parameter is adjusted once based on G1 through a series of processing, a next group G2 of training samples that is located after G1 may serve as the current group of training samples, in a case that the stop-training condition is not met. Similarly, after the model parameter is adjusted once based on G2 through a series of processing, a next group G3 of training samples that is located after G2 may serve as the current group of training samples, in a case that the stop-training condition is still not met. Moreover, after the model parameter is adjusted once based on G5 through a series of processing, the next group G1 of training samples that is located after G5 may serve as the current group of training samples, in a case that the stop-training condition is still not met. Subsequent determination of the current group of training samples is similar, and would not be described again herein.

In a case that the stop-training condition is met, the to-be-trained model corresponding to the moment at which the stop-training condition is met (hereinafter such model is briefly referred to as a target model) may be stored. The target model may be directly obtained and used in subsequent processes when needed. Alternatively, in the case that the stop-training condition is met, only the model parameter of the to-be-trained model corresponding to the moment at which the stop-training condition is met (hereinafter such model parameter is briefly referred to as a target model parameter) may be stored. In subsequent processes, when the target model is needed, the target model parameter may be obtained and imported into a corresponding model framework, to obtain the target model for usage.

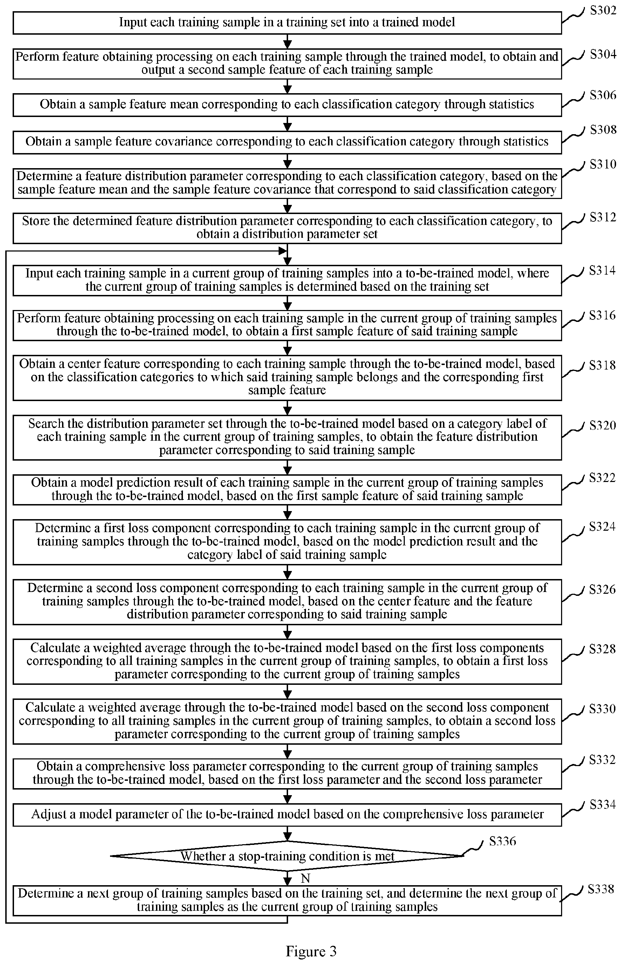

As shown in Figure 3, a method for model training is provided according to an embodiment. The method may include steps S302 to S338.

In step S302, a computer device inputs each training sample in a training set into a trained model, where the training set is configured to train a to-be-trained model, the trained model is a model that has been trained, and a model scale parameter of the trained model is greater than that of the to-be-trained model.

In step S304, the computer device performs feature obtaining processing on each training sample based on the trained model, to obtain and output a second sample feature of each training sample.

In step S306, the computer device obtains a sample feature mean corresponding to each classification category through statistics, where the sample feature mean corresponding to each classification category is a mean of the second sample features of all training samples that are in the training set and belong to said classification category.

In step S308, the computer device obtains a sample feature covariance corresponding to each classification category through statistics, where the sample feature covariance corresponding to each classification category is a covariance of the second sample features of all training samples that are in the training set and belong to said classification category.

In step S310, the computer device determines a feature distribution parameter corresponding to each classification category, based on the sample feature mean and the sample feature covariance that correspond to said classification category,.

In step S312, the computer device stores the determined feature distribution parameter corresponding to each classification category, to obtain a distribution parameter set.

In step S314, the computer device inputs each training sample in a current group of training samples into the to-be-trained model, where the current group of training samples is determined based on the training set.

In step S316, the computer device performs feature obtaining processing on each training sample in the current group of training samples based on the to-be-trained model, to obtain a first sample feature of said training sample.

In step S318, the computer device obtains a center feature corresponding to each training sample based on the to-be-trained model, based on the classification categories to which said training sample belongs and the corresponding first sample feature.

In step S320, the computer device searches the distribution parameter set based on the to-be-trained model based on a category label of each training sample in the current group of training samples, to obtain the feature distribution parameter corresponding to said training sample, where the category label is configured to represent a classification category to which said training sample belongs.

In step S322, the computer device obtains a model prediction result of each training sample in the current group of training samples based on the to-be-trained model, based on the first sample feature of said training sample.

In step S324, the computer device determines a first loss component corresponding to each training sample in the current group of training samples based on the to-be-trained model, based on the model prediction result and the category label of said training sample.

In step S326, the computer device determines a second loss component corresponding to each training sample in the current group of training samples based on the to-be-trained model, based on the center feature and the feature distribution parameter corresponding to said training sample.

In step S328, the computer device calculates a weighted average based on the to-be-trained model based on the first loss components corresponding to all training samples in the current group of training samples, to obtain a first loss parameter corresponding to the current group of training samples.

In step S330, the computer device calculates a weighted average based on the to-be-trained model based on the second loss component corresponding to all training samples in the current group of training samples, to obtain a second loss parameter corresponding to the current group of training samples.

In step S332, the computer device obtains a comprehensive loss parameter corresponding to the current group of training samples based on the to-be-trained model, based on the first loss parameter and the second loss parameter.

In step S334, the computer device adjusts a model parameter of the to-be-trained model based on the comprehensive loss parameter.

In step S336, the computer device determines whether a stop-training condition is met. In a case that the stop-training condition is not met, the computer device determines a next group of training samples based on the training set, and proceeds to step S338. In a case that the stop-training condition is met, the computer device terminates the training process (not shown).

In step S338, the computer device determines the next group of training samples based on the training set, determines the next group of training samples as the current group of training samples, and returns to step S314.

Specific definitions of technical features in this embodiment may be same as those of the corresponding technical features in the foregoing description, and details are not described again herein.

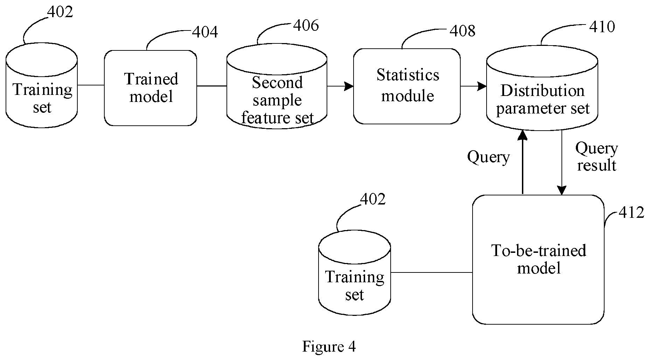

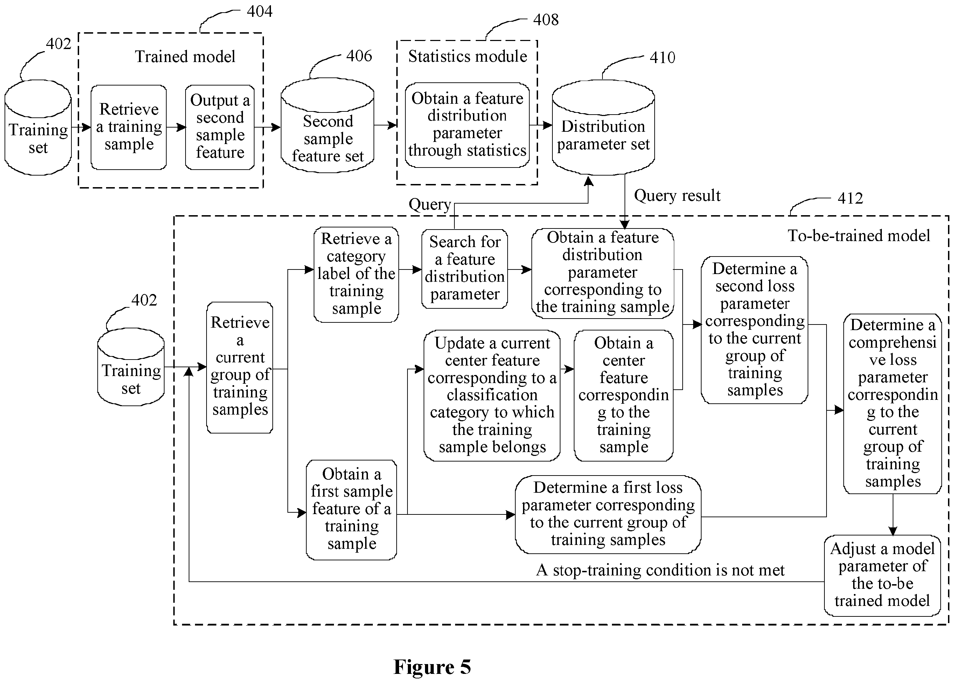

Reference is made to Figure 4 and Figure 5. A computer device that implements the method for model training according to embodiments of the present disclosure may include following components: a training set 402, a trained model 404, a second sample feature set 406, a statistic module 408, a distribution parameter set 410, and a to-be-trained model 412.

The training set 402 may be configured to record training samples required for training the to-be-trained model 412. The trained model 404 may be configured to read each training sample in the training set 402 and output a second sample feature of each training sample. The second sample feature set 406 may be configured to record the second sample features that are outputted by the trained model 404. The statistic module 408 is an executable program function module, and may be configured to perform statistics on the second sample features of the training samples that are in the training set and belong to each classification category, to determine a feature distribution parameter corresponding to said classification category. The distribution parameter set 410 may be configured to record the feature distribution parameters obtained through statistics. The to-be-trained model 412 may be configured to search the distribution parameter set 410 to obtain a feature distribution parameter corresponding to a training sample, and perform operations in the dashed-line box in which the to-be-trained model 412 is located as shown in Figure 5 (details are not described herein), so as to train the to-be-trained model 412.

Although the steps in the flowcharts concerning the foregoing embodiments are displayed in sequence indicated by arrows, these steps are not necessarily performed in the order as indicated by the arrows. Unless expressly stated herein, the order in which these steps are performed is not strictly limited, and these steps may be performed in other orders. At least a part of the steps in the flowcharts may include multiple sub-steps or stages. These sub-steps or stages are not necessarily performed synchronously, and may be performed asynchronously. These sub-steps or stages are not necessarily performed in sequence, and may be performed in turn or performed alternately with other steps or at least a part of sub-steps or stages in other steps.

The method for model training according to embodiments of the present disclosure may be applied to face recognition. In a specific embodiment, a corresponding face image training set is first obtained for a face recognition task. Then, a to-be-trained model is trained based on face image samples in the face image training set, with the method for model training according to any embodiment of the present disclosure. After the training is completed, a face recognition model capable of implementing the face recognition task is obtained. Thereby, in practical applications, the face recognition model can output a corresponding recognition result upon reading a to-be-recognized face image.

The face recognition task may concern a task in a 1:1 mode, a 1:N mode, or the like. The 1:1 mode, also known as an identity authentication mode, is substantially a fast comparison between a to-be-recognized face image and an image database, to obtain a recognition result indicating whether there is a match. The 1:1 mode is applied to scenarios such as "face swiping" boarding, "face swiping" ticket check, and "face swiping" payment. The 1:N mode is searching a massive image database for a to-be-recognized face image, and is applied to scenarios such as "face swiping" identification of a pedestrian who runs a red light.

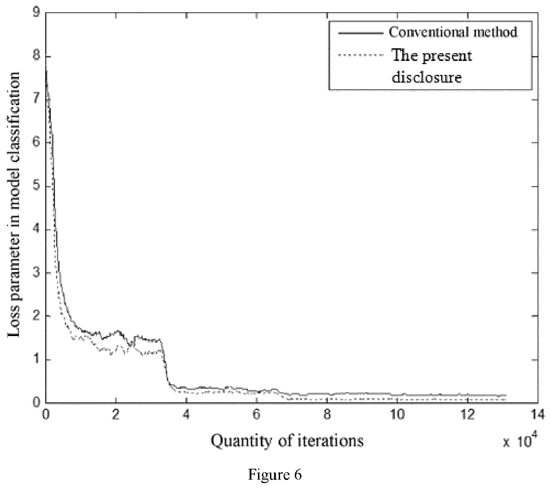

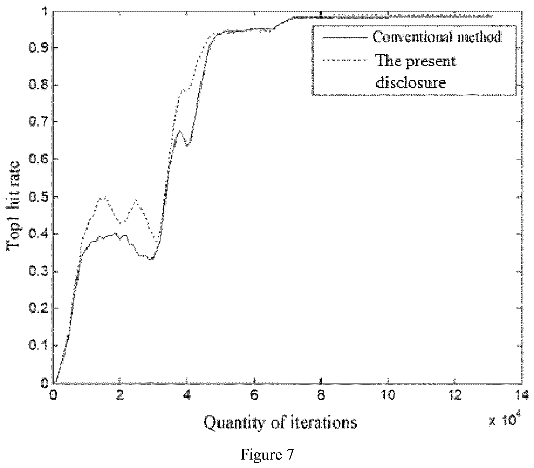

Hereinafter described is an experiment result of a specific face recognition task. A to-be-trained model is trained through the method for model training according to embodiments of the present disclosure and a conventional method, respectively, based on an independently established training set including 3000 categories. Figure 6 shows curves of loss parameters in model classification of the above two cases. As shown in Figure 6, the loss parameter converges faster and ends at a smaller value, when the to-be-trained model is trained through the method for model training according to embodiments of the present disclosure. Figure 7 is a schematic diagram of curves of Top1 hit rates of models obtained in the above two cases. As shown in Figure 7, the model trained through the method for model training according to embodiments of the present disclosure exhibits higher accuracy for the test set, in comparison with the model trained through the conventional method.

Table 1 shows information about an actual service dataset. The actual service dataset includes both data of an experiment in the 1:1 mode and data of an experiment in the 1:N mode. The experiment in the 1:1 mode corresponds to a face-authenticating-identity service (that is, checking an identity based on a face image), and the experiment in the 1:N mode corresponds to a face recognition service.

Table 1

| Name of Actual Service Evaluation Set | | Total Quantity of Identities | Dataset Scenario Description |
|---|---|---|---|
| Experiment evaluation set in 1: 1 mode | TCSetFV_IdQz1 | 497 | High-definition ID photos and selfies |
| | TCSetFV_ Qz1 | 698 | ID photos and selfies |
| | TCSetFV_ WmCam | 1000 | Mobile phone selfies, despeckled photos, and high-definition ID photos |
| Experiment evaluation set in 1: N mode | TCSetFR cam | 1000 | Surveillance scene photos acquired by IP Cam |
| | TCSetFR_id | 1000 | High-definition ID photos corresponding to TCSetFR cam |
| | TCSetFR ZJZ300W | 2982921 | High-definition ID photos |

Based on the actual service dataset shown in Table 1, shown in Table 2 and Table 3 are test results of the foregoing experiments in the 1:1 mode (face authenticating-identity service) and the 1:N mode (face recognition service), respectively. Each experiment is performed on the models trained through the method for model training according to embodiments of the present disclosure and the conventional method, respectively.

Table 2

| Method | Name of Actual Service Evaluation Set | | | | | |
|---|---|---|---|---|---|---|
| | TCSetFV_Qz1 | | TCSetFVIdQz1 | | TCSetFV_hldCam1 | |
| | FAR=0.1% | FAR=0.01% | FAR=0.1% | FAR=0.01% | FAR=0.01% | FAR=0.01% |
| Conventional | 94.73% | 93.09% | 98.09% | 95.03% | 98.39% | 97.28% |
| The present disclosure | 94.90% | 93.46% | 98.36% | 96.49% | 98.61% | 98.11% |

Table 3

| Method | Name of Actual Service Evaluation Set | | | |
|---|---|---|---|---|
| | Test set: TCSetFR_ cam; registration set:: TCSetFR_id+TCSetFR_ ZJZ300W (Registration scale: 3,000,000) | | | |
| | Top 1 | far = $1/10^6$ | far = $1/10^7$ | far = $1/10^8$ |
| Conventional | 82.47% | 89.53% | 76.73% | 64.07% |
| The present disclosure | 88.07% | 92.87% | 82.33% | 69.87% |

In Table 2 and Table 3, both far and FAR (false acceptance rate) indicate a false acceptance rate, and Top1 indicates a first-time hit rate. From the comparison results in Table 2 and Table 3, in both the experiment in the 1:1 mode and the experiment in the 1:N mode, the passed rates of the model trained through the method for model training according to embodiments of the present disclosure are significantly higher than that of the model trained through the conventional method, under a same false acceptance rate.

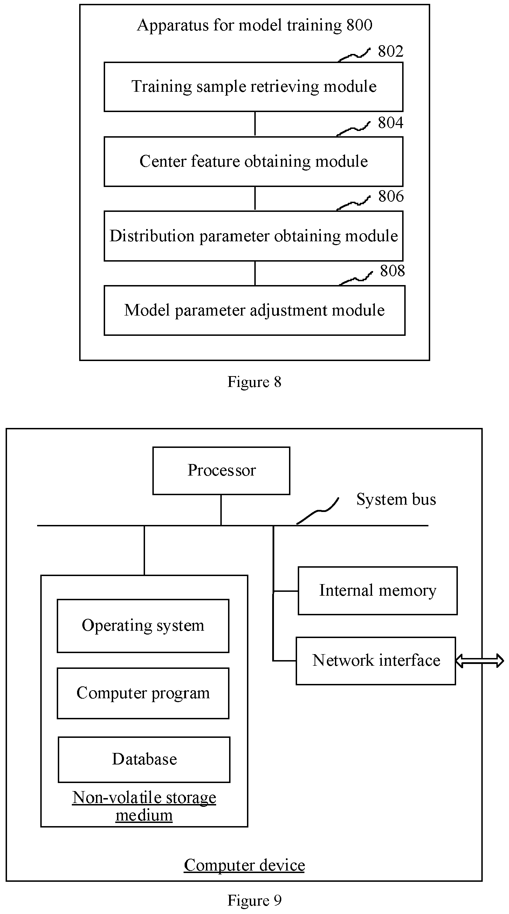

As shown in Figure 8, an apparatus 800 for training a model is provided according to an embodiment of the present disclosure. The apparatus may include a training sample retrieving module 802, a center feature obtaining module 804, a distribution parameter obtaining module 806, and a model parameter adjustment module 808.

The training sample retrieving module 802 is configured to retrieve a current group of training samples, where the current group of training samples is determined based on a training set.

The center feature obtaining module 804 is configured to, for each training sample in the current group of training samples, obtain a first sample feature based on a to-be-trained model, and obtain a corresponding center feature based on the first sample feature and a classification category to which said training sample belongs.

The distribution parameter obtaining module 806 is configured to, for each training sample in the current group of training samples, obtain a corresponding feature distribution parameter, where the corresponding feature distribution parameter is obtained by performing statistics on a second sample feature of each training sample that is in the training set and belongs to the same classification category as said training sample. The second sample feature of each training sample is outputted based on said sample by a trained model.

The model parameter adjustment module 808 is configured to obtain a comprehensive loss parameter corresponding to the current group of training samples, based on all center features and all feature distribution parameters, and adjust a model parameter of the to-be-trained model based on the comprehensive loss parameter.

In a specific embodiment, the distribution parameter obtaining module 806 may be configured to search a distribution parameter set based on a category label of said training sample, to obtain the feature distribution parameter corresponding to said training sample. The category label is configured to represent the classification category to which said training sample belongs, and the distribution parameter set includes the feature distribution parameter corresponding to the classification category.

In an embodiment, the apparatus 800 for model training may further include a training sample input module, a second feature output module, a distribution feature determining module, and a distribution parameter set obtaining module. The training sample input module is configured to input each training sample in the training set into the trained model. The second feature output module is configured to output the second sample feature of each training sample in the training set based on the trained model. The distribution feature determining module is configured to perform statistics on the second sample features of all training samples that are in the training set and belong to each classification category, to determine the feature distribution parameter corresponding to said classification category. The distribution parameter set obtaining module is configured to store the determined feature distribution parameter corresponding to each classification category, to obtain the distribution parameter set.

In an embodiment, the distribution parameter determining module may include a feature mean determining unit, a feature covariance determining unit, and a distribution parameter determining unit. The feature mean determining unit is configured to determine a sample feature mean corresponding to each classification category, where the sample feature mean corresponding to each classification category is a mean of the second sample features of all training samples that are in the training set and belong to the classification category. The feature covariance determining unit is configured to determine a sample feature covariance corresponding to each classification category, where the sample feature covariance corresponding to each classification category is a covariance of the second sample features of all training samples that are in the training set and belong to said classification category. The distribution parameter determining unit is configured to determine the feature distribution parameter corresponding to each classification category, based on the sample feature mean and the sample feature covariance that correspond to said classification category.

In an embodiment, the apparatus 800 for model training may further include a prediction result obtaining module and a first loss component determining module. The prediction result obtaining module is configured to obtain a model prediction result for each training sample, based on the to-be-trained model based on the corresponding first sample feature. The first loss component determining module is configured to determine a first loss component corresponding to each training sample, based on the model prediction result and a category label of said training sample, where the category label is configured to represent the classification category to which said training sample belongs. In such case, the model parameter adjustment module 808 may include a second loss component determining unit and a comprehensive loss parameter determining unit. The second loss component determining unit is configured to determine a second loss component corresponding to each training sample, based on the corresponding center feature and the corresponding feature distribution parameter. The comprehensive loss parameter determining unit is configured to obtain the comprehensive loss parameter corresponding to the current group of training samples, based on all first loss components and all second loss components.

In an embodiment, the comprehensive loss parameter determining unit may include a first loss parameter determining subunit, a second loss parameter determining subunit, and a first comprehensive parameter determining subunit. The first loss parameter determining subunit is configured to calculate a weighted average from the first loss components corresponding to all training samples, to obtain a first loss parameter corresponding to the current group of training samples. The second loss parameter determining subunit is configured to calculate a weighted average from the second loss components corresponding to all training samples, to obtain a second loss parameter corresponding to the current group of training samples. The first comprehensive parameter determining subunit is configured to obtain the comprehensive loss parameter corresponding to the current group of training samples, based on the first loss parameter and the second loss parameter.

In a specific embodiment, the first comprehensive parameter determining subunit may be configured to: multiply the second loss parameter with a first influence coefficient, to determine an influence loss parameter; and obtain the comprehensive loss parameter corresponding to the current group of training samples, based on the first loss parameter and the influence loss parameter.

In an embodiment, the comprehensive loss parameter determining unit may include a comprehensive loss component determining subunit and a second comprehensive parameter determining subunit. The comprehensive loss component determining subunit is configured to determine a comprehensive loss component corresponding to each training sample, based on the first loss component and the second loss component that correspond to said training sample. The second comprehensive parameter determining subunit is configured to calculate a weighted average from all comprehensive loss components, to obtain the comprehensive loss parameter corresponding to the current group of training samples.

In a specific embodiment, the second comprehensive parameter determining subunit may be configured to: multiply a second influence coefficient with the second loss component corresponding to each training sample, to determine an influence loss component of said training sample; and obtain the comprehensive loss component corresponding to each training sample, based on the first loss component and the influence loss component that correspond to said training sample.

In a specific embodiment, sequentially for each training sample, the center feature obtaining module 804 may be configured to: determine a current center feature corresponding to the classification category to which said training sample belongs; and update the current center feature based on the first sample feature of said training sample, to obtain an updated center feature corresponding to the classification category to which said training sample belongs, where the center feature corresponding to said training sample includes the updated center feature.

In an embodiment, the apparatus 800 for model training may further include the following modules a next training sample group determining module and a returning module.

The next training sample group determining module is configured to determine a next group of training samples based on the training set, in a case that a stop-training condition is not met.

The returning module is configured to determine the next group of training samples as the current group of training samples, and invoke the training sample retrieving module 802. Thereby, the processing returns to retrieving the current group of training samples.

In an embodiment, the training samples include a face image sample, a scale parameter of the trained model is greater than a scale parameter of the to-be-trained model, and the scale parameter includes a depth of a model.

Specific definitions of technical features involved in the apparatus 800 for model training may refer to the definitions of the corresponding technical features involved in the foregoing method for model training, and details are not described again herein. All or some of the modules in the apparatus 800 for model training may be implemented in software, hardware, or a combination of the two. The foregoing modules may be embedded in or independent from a processor of a computer device in a form of hardware, or may be stored in a memory of a computer device in a form of software, so as to facilitate a processor invoking and performing operations corresponding to the foregoing modules.

In an embodiment, a computer device is provided, including a memory and a processor. The memory stores a computer program. The processor when executing the computer program performs the steps of the method for model training provided according to any embodiment of the present disclosure.

In a specific example, the computer device may be the server 120 as shown in Figure 1. An internal structure of the computer device may be as shown in Figure 9. The computer device includes a processor, a memory, a network interface, and a database that are connected via a system bus. The processor is configured to provide computing and control capabilities. The memory includes a non-volatile storage medium and an internal memory. The non-volatile storage medium stores an operating system, a computer program, and a database. The internal memory provides an environment for running the operating system and the computer program in the non-volatile storage medium. The database is configured to store the feature distribution parameter. The network interface is configured to communicate with an external terminal via a network connection. The computer program is executed by the processor to implement the method for model training.

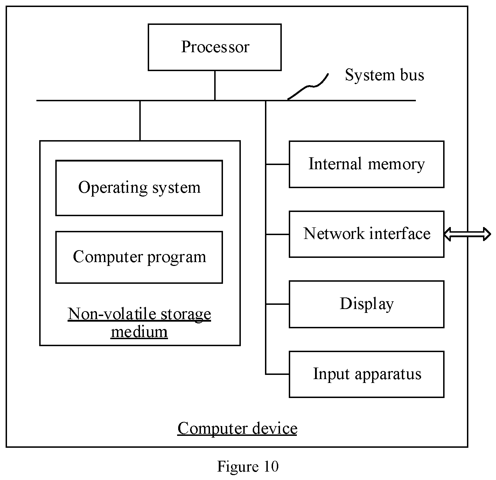

In another specific example, the computer device may be the terminal 110 as shown in Figure 1. An internal structure of the computer device may be as shown in Figure 10. The computer device includes a processor, a memory, a network interface, a display, and an input apparatus that are connected via a system bus. The processor is configured to provide computing and control capabilities. The memory includes a non-volatile storage medium and an internal memory. The non-volatile storage medium stores an operating system and a computer program. The internal memory provides an environment for running the operating system and the computer program in the non-volatile storage medium. The computer program is executed by the processor to implement the method for model training. The network interface is configured to communicate with an external terminal through a network connection. The display may be a liquid crystal display or an electronic ink display. The input apparatus of the computer device may be a touch layer covering the display, may be a key, a trackball, or a touchpad disposed on a housing of the computer device, or may be an external keyboard, touchpad, or mouse.

A person skilled in the art may understand that the structure shown in Figure 9 and Figure 10 are merely block diagrams of a part of the structures related to the solution of the present disclosure, and do not constitute a limitation to the computer device to which the solution of the present disclosure is applied. In a specific embodiment, the computer device may include more or fewer components than those shown in the figure, some components may be combined, or a different component configuration may be used.

In an embodiment, the apparatus for model training according to the present disclosure may be implemented in a form of a computer program, and the computer program may be executed on the computer device as shown in Figure 9 or Figure 10. The memory of the computer device may store a program module included in the apparatus for model training, for example, the training sample retrieving module 802, the center feature obtaining module 804, the distribution parameter obtaining module 806, or the model parameter adjustment module 808 as shown in Figure 8. The computer program formed by the program modules configures the processor to perform the steps of the method for model training according to embodiments of the present disclosure. For example, the computer device as shown in Figure 8 or Figure 9 may perform the step S202 by using the training sample retrieving module 802, perform the step S204 by using the center feature obtaining module 804, perform the step S206 by using the distribution parameter obtaining module 806, or perform the step S208 by using the model parameter adjustment module 808, in the apparatus 800 for model training as shown in Figure 8.

A person of ordinary skill in the art may understand that all or some of the processes in the foregoing method embodiments may be implemented by a computer program instructing related hardware. The program may be stored in a non-volatile computer-readable storage medium, and the program when executed may include a flow in the foregoing method embodiments. Any reference to the memory, storage, database, or other media used in the embodiments provided in the present disclosure may include a non-volatile and/or volatile memory. The non-volatile memory may include a read-only memory (ROM), a programmable ROM (PROM), an electrically programmable ROM (EPROM), an electrically erasable programmable ROM (EEPROM), or a flash. The volatile memory may include a random access memory (RAM) or an external cache. As an example but not limitation, the RAM is available in various forms, such as a static RAM (SRAM), a dynamic RAM (DRAM), a synchronous DRAM (SDRAM), a double data rate SDRAM (DDRSDRAM), an enhanced SDRAM (ESDRAM), a synchronization link (Synchlink) DRAM (SLDRAM), a rambus direct RAM (RDRAM), a direct rambus dynamic RAM (DRDRAM), or a rambus dynamic RAM (RDRAM).

On such basis, a computer-readable storage medium is provided in an embodiment. The computer-readable storage medium stores a computer program. The computer program when executed by a processor performs the method for model training according to any embodiment of the present disclosure.

The technical features in the foregoing embodiments may be combined arbitrarily. For brevity of description, not all possible combinations of the technical features in the embodiments are described. All combinations of the technical features are considered to fall within the scope set forth in this specification, as long as they do not conflict with each other.

The foregoing embodiments only describe several implementations of the present disclosure, which are specifically described in detail, and should not be construed as a limitation to the patent scope of the present disclosure. A person of ordinary skill in the art may make further variations and improvements without departing from the concepts of the present disclosure, and all such variations and improvements fall within the protection scope of the present disclosure. Therefore, the protection scope of the present disclosure is subject to the protection scope of the appended claims.

**Claims**

1. A method for model training, comprising:

   retrieving, by a computer device, a current group of training samples, wherein the current group of training samples is determined based on a training set;
   obtaining, by the computer device, a first sample feature of each training sample in the current group of training samples based on a to-be-trained model;
   obtaining, by the computer device, a center feature corresponding to each training sample in the current group of training samples, based on the first sample feature and a classification category to which said training sample belongs;
   obtaining, by the computer device, a feature distribution parameter corresponding to each training sample in the current group of training samples, wherein:
   the corresponding feature distribution parameter is obtained by performing statistics on a second sample feature of each training sample that is in the training set and belongs to the same classification category as said training sample, and the second sample feature of each training sample is outputted based on said sample by a trained model;
   obtaining, by the computer device, a comprehensive loss parameter corresponding to the current group of training samples, based on all center features and all feature distribution parameters; and
   adjusting, by the computer device, a model parameter of the to-be-trained model based on the comprehensive loss parameter.

2. The method according to claim 1, wherein obtaining, by the computer device, the feature distribution parameter corresponding to each training sample in the current group of training samples comprises:

searching, by the computer device, a distribution parameter set based on a category label of said training sample, to obtain the feature distribution parameter corresponding to said training sample; wherein the category label is configured to represent the classification category to which said training sample belongs, and the distribution parameter set comprises the feature distribution parameter corresponding to the classification category.

3. The method according to claim 2, further comprising: obtaining the distribution parameter set, which comprises:

inputting each training sample in the training set into the trained model; outputting the second sample feature of each training sample in the training set based on the trained model; performing statistics on the second sample features of all training samples that are in the training set and belong to each classification category, to determine the feature distribution parameter corresponding to said classification category; and storing the determined feature distribution parameter corresponding to each classification category, to obtain the distribution parameter set.

4. The method according to claim 3, wherein performing, by the computer device, statistics on the second sample features of all training samples that are in the training set and belong to each classification category, to determine the feature distribution parameter corresponding to said classification category, comprises:

determining, by the computer device, a sample feature mean corresponding to each classification category, wherein the sample feature mean corresponding to each classification category is a mean of the second sample features of all training samples that are in the training set and belong to the classification category; determining, by the computer device, a sample feature covariance corresponding to each classification category, wherein the sample feature covariance corresponding to each classification category is a covariance of the second sample features of all training samples that are in the training set and belong to said classification category; and determining, by the computer device, the feature distribution parameter corresponding to each classification category, based on the sample feature mean and the sample feature covariance that correspond to said classification category.

5. The method according to claim 1, wherein:

before obtaining, by the computer device, the comprehensive loss parameter corresponding to the current group of training samples, based on all center features and all feature distribution parameters, the method further comprises:

obtaining, by the computer device, a model prediction result for each training sample, based on the to-be-trained model based on the corresponding first sample feature; and determining, by the computer device, a first loss component corresponding to each training sample, based on the model prediction result and a category label of said training sample, wherein the category label is configured to represent the classification category to which said training sample belongs; and

obtaining, by the computer device, the comprehensive loss parameter corresponding to the current group of training samples, based on all center features and all feature distribution parameters comprises:

determining, by the computer device, a second loss component corresponding to each training sample, based on the corresponding center feature and the corresponding feature distribution parameter; and obtaining, by the computer device, the comprehensive loss parameter corresponding to the current group of training samples, based on all first loss components and all second loss components.

6. The method according to claim 5, wherein obtaining, by the computer device, the comprehensive loss parameter corresponding to the current group of training samples, based on all first loss components and all second loss components comprises:

calculating, by the computer device, a weighted average from the first loss components corresponding to all training samples, to obtain a first loss parameter corresponding to the current group of training samples;
calculating, by the computer device, a weighted average from the second loss components corresponding to all training samples, to obtain a second loss parameter corresponding to the current group of training samples; and
obtaining, by the computer device, the comprehensive loss parameter corresponding to the current group of training samples, based on the first loss parameter and the second loss parameter.

7. The method according to claim 6, wherein obtaining, by the computer device, the comprehensive loss parameter corresponding to the current group of training samples, based on the first loss parameter and the second loss parameter comprises:

multiplying, by the computer device, the second loss parameter with a first influence coefficient, to determine an influence loss parameter; and
obtaining, by the computer device, the comprehensive loss parameter corresponding to the current group of training samples, based on the first loss parameter and the influence loss parameter.

8. The method according to claim 5, wherein obtaining, by the computer device, the comprehensive loss parameter corresponding to the current group of training samples, based on all first loss components and all second loss components comprises:

determining, by the computer device, a comprehensive loss component corresponding to each training sample, based on the first loss component and the second loss component that correspond to said training sample; and
calculating, by the computer device, a weighted average from all comprehensive loss components, to obtain the comprehensive loss parameter corresponding to the current group of training samples.

9. The method according to claim 8, wherein determining, by the computer device, the comprehensive loss component corresponding to each training sample, based on the first loss component and the second loss component that correspond to said training sample comprises:

multiplying, by the computer device, a second influence coefficient with the second loss component corresponding to each training sample, to determine an influence loss component of said training sample; and
determining, by the computer device, the comprehensive loss component corresponding to each training sample, based on the first loss component and the influence loss component that correspond to said training sample.

10. The method according to claim 1, wherein obtaining, by the computer device, a center feature corresponding to each training sample in the current group of training samples, based on the first sample feature and a classification category to which said training sample belongs comprises:

by the computer device sequentially for each training sample,
determining a current center feature corresponding to the classification category to which said training sample belongs; and
updating the current center feature based on the first sample feature of said training sample, to obtain an updated center feature corresponding to the classification category to which said training sample belongs;
wherein the center feature corresponding to said training sample comprises the updated center feature.

11. The method according to claim 1, wherein after adjusting the model parameter of the to-be-trained model based on the comprehensive loss parameter, the method further comprises:

in a case that a stop-training condition is not met,
determining, by the computer device, a next group of training samples based on the training set;
determining, by the computer device, the next group of training samples as the current group of training samples, and
returning to the step of retrieving the current group of training samples.

12. The method according to claim 1, wherein:

the training samples comprise a face image sample; and
a scale parameter of the trained model is greater than a scale parameter of the to-be-trained model, and the scale parameter comprises a depth of a model.

**13.** A computer device, comprising a memory and a processor, wherein the memory stores a computer program, and the processor when executing the computer program performs:

retrieving a current group of training samples, wherein the current group of training samples is determined based on a training set;
obtaining a first sample feature of each training sample in the current group of training samples based on a to-be-trained model;
obtaining a center feature corresponding to each training sample in the current group of training samples, based on the first sample feature and a classification category to which said training sample belongs;
obtaining a feature distribution parameter corresponding to each training sample in the current group of training samples, wherein:
the corresponding feature distribution parameter is obtained by performing statistics on a second sample feature of each training sample that is in the training set and belongs to the same classification category as said training sample, and the second sample feature of each training sample is outputted based on said sample by a trained model;
obtaining a comprehensive loss parameter corresponding to the current group of training samples, based on all center features and all feature distribution parameters; and
adjusting a model parameter of the to-be-trained model based on the comprehensive loss parameter.

**14.** The computer device according to claim 13, wherein the processor when executing the computer program performs:

searching a distribution parameter set based on a category label of said training sample, to obtain the feature distribution parameter corresponding to said training sample;
wherein the category label is configured to represent the classification category to which said training sample belongs, and the distribution parameter set comprises the feature distribution parameter corresponding to the classification category.

**15.** The computer device according to claim 14, wherein the processor when executing the computer program performs:

inputting each training sample in the training set into the trained model;
outputting the second sample feature of each training sample in the training set based on the trained model;
performing statistics on the second sample features of all training samples that are in the training set and belong to each classification category, to determine the feature distribution parameter corresponding to said classification category; and
storing the determined feature distribution parameter corresponding to each classification category, to obtain the distribution parameter set.

**16.** The computer device according to claim 13, wherein the processor when executing the computer program performs:

obtaining a model prediction result for each training sample, based on the to-be-trained model based on the corresponding first sample feature; and
determining a first loss component corresponding to each training sample, based on the model prediction result and a category label of said training sample, wherein the category label is configured to represent the classification category to which said training sample belongs; and
wherein obtaining the comprehensive loss parameter corresponding to the current group of training samples, based on all center features and all feature distribution parameters comprises:

determining a second loss component corresponding to each training sample, based on the corresponding center feature and the corresponding feature distribution parameter; and
obtaining the comprehensive loss parameter corresponding to the current group of training samples, based on all first loss components and all second loss components.

**17.** The computer device according to claim 16, wherein the processor when executing the computer program performs:

determining a comprehensive loss component corresponding to each training sample, based on the first loss component and the second loss component that correspond to said training sample; and

calculating a weighted average from all comprehensive loss components, to obtain the comprehensive loss parameter corresponding to the current group of training samples.

**18.** The computer device according to claim 17, wherein the processor when executing the computer program performs:

multiplying a second influence coefficient with the second loss component corresponding to each training sample, to determine an influence loss component of said training sample; and
determining the comprehensive loss component corresponding to each training sample, based on the first loss component and the influence loss component that correspond to said training sample.

**19.** The computer device according to claim 13, wherein the processor when executing the computer program performs:

sequentially for each training sample,
determining a current center feature corresponding to the classification category to which said training sample belongs; and
updating the current center feature based on the first sample feature of said training sample, to obtain an updated center feature corresponding to the classification category to which said training sample belongs;
wherein the center feature corresponding to said training sample comprises the updated center feature.

**20.** A computer-readable storage medium, storing a computer program, wherein the computer program when executed by a processor implements:

retrieving a current group of training samples, wherein the current group of training samples is determined based on a training set;
obtaining a first sample feature of each training sample in the current group of training samples based on a to-be-trained model;
obtaining a center feature corresponding to each tfraining sample in the current group of training samples, based on the first sample feature and a classification category to which said training sample belongs;
obtaining a feature distribution parameter corresponding to each training sample in the current group of training samples, wherein:
the corresponding feature distribution parameter is obtained by performing statistics on a second sample feature of each training sample that is in the training set and belongs to the same classification category as said training sample, and the second sample feature of each training sample is outputted based on said sample by a trained model;
obtaining a comprehensive loss parameter corresponding to the current group of training samples, based on all center features and all feature distribution parameters; and
adjusting a model parameter of the to-be-trained model based on the comprehensive loss parameter.

110

Network connection

120

Figure 1

S202

Read a current group of training samples, where the current group of training samples is determined based on a training set

S204

Obtain a first sample feature of each training sample in the current group of training samples based on a to-be-trained model, and obtain a corresponding center feature based on the first sample feature and a classification category to which said training sample belongs

S206

Obtain a feature distribution parameter corresponding to each training sample in the current group of training samples, where the corresponding feature distribution parameter is obtained by performing statistics on a second sample feature of each training sample that is in the training set and belongs to the same classification category as said training sample, and where the second sample feature of each training sample is outputted based on such training sample by a trained model

S208

Obtain a comprehensive loss parameter corresponding to the current group of training samples, based on all center features and all feature distribution parameters, and adjust a model parameter of the to-be-trained model based on the comprehensive loss parameter

Figure 2

Input each training sample in a training set into a trained model _/ S302

↓

Perform feature obtaining processing on each training sample through the trained model, to obtain and output a second sample feature of each training sample _/ S304

↓

Obtain a sample feature mean corresponding to each classification category through statistics _/ S306

↓

Obtain a sample feature covariance corresponding to each classification category through statistics _/ S308

↓

Determine a feature distribution parameter corresponding to each classification category, based on the sample feature mean and the sample feature covariance that correspond to said classification category _/ S310

↓

Store the determined feature distribution parameter corresponding to each classification category, to obtain a distribution parameter set _/ S312

↓

Input each training sample in a current group of training samples into a to-be-trained model, where the current group of training samples is determined based on the training set _/ S314

↓

Perform feature obtaining processing on each training sample in the current group of training samples through the to-be-trained model, to obtain a first sample feature of said training sample _/ S316

↓

Obtain a center feature corresponding to each training sample through the to-be-trained model, based on the classification categories to which said training sample belongs and the corresponding first sample feature _/ S318

↓

Search the distribution parameter set through the to-be-trained model based on a category label of each training sample in the current group of training samples, to obtain the feature distribution parameter corresponding to said training sample _/ S320

↓

Obtain a model prediction result of each training sample in the current group of training samples through the to-be-trained model, based on the first sample feature of said training sample _/ S322

↓

Determine a first loss component corresponding to each training sample in the current group of training samples through the to-be-trained model, based on the model prediction result and the category label of said training sample _/ S324

↓

Determine a second loss component corresponding to each training sample in the current group of training samples through the to-be-trained model, based on the center feature and the feature distribution parameter corresponding to said training sample _/ S326

↓

Calculate a weighted average through the to-be-trained model based on the first loss components corresponding to all training samples in the current group of training samples, to obtain a first loss parameter corresponding to the current group of training samples _/ S328

↓

Calculate a weighted average through the to-be-trained model based on the second loss component corresponding to all training samples in the current group of training samples, to obtain a second loss parameter corresponding to the current group of training samples _/ S330

↓

Obtain a comprehensive loss parameter corresponding to the current group of training samples through the to-be-trained model, based on the first loss parameter and the second loss parameter _/ S332

↓

Adjust a model parameter of the to-be-trained model based on the comprehensive loss parameter _/ S334

↓

Whether a stop-training condition is met _/ S336

↓ N

Determine a next group of training samples based on the training set, and determine the next group of training samples as the current group of training samples _/ S338

Figure 3

Figure 4

**Figure 5**

Figure 6

Figure 7

Figure 8

Figure 9

Processor

System bus

Operating system

Computer program

Non-volatile storage
medium

Internal memory

Network interface

Display

Input apparatus

Computer device

Figure 10

## INTERNATIONAL SEARCH REPORT

| International application No. |
| --- |
| **PCT/CN2019/084946** |

| **A.** | **CLASSIFICATION OF SUBJECT MATTER** |
| --- | --- |

G06K 9/62(2006.01)i

According to International Patent Classification (IPC) or to both national classification and IPC

| **B.** | **FIELDS SEARCHED** |
| --- | --- |

Minimum documentation searched (classification system followed by classification symbols)

G06K9/-; G06N20/-

Documentation searched other than minimum documentation to the extent that such documents are included in the fields searched

Electronic data base consulted during the international search (name of data base and, where practicable, search terms used)

CNABS; VEN; CNTXT; EPTXT; WOTXT; USTXT; CNKI: 模型, 训练, 样本, 特征, 分布参数, 统计, model, train, sample, feature, distribution parameter, statistic

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| PX | CN 108805185 A (TENCENT TECHNOLOGY (SHENZHEN) CO., LTD.) 13 November 2018 (2018-11-13) <br> entire document | 1-20 |
| A | CN 107784312 A (TENCENT CREDIT INVESTIG CO., LTD.) 09 March 2018 (2018-03-09) <br> entire document | 1-20 |
| A | CN 105912500 A (BAIDU ONLINE NETWORK TECHNOLOGY (BEIJING) CO., LTD.) 31 August 2016 (2016-08-31) <br> entire document | 1-20 |
| A | US 8719191 B2 (INT BUSINESS MACHINES CORP.) 06 May 2014 (2014-05-06) <br> entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 July 2019** | **08 August 2019** |

| Name and mailing address of the ISA/CN | Authorized officer |
| --- | --- |
| **National Intellectual Property Administration, PRC (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/084946**

| Patent document cited in search report | | | Publication date (day/month/year) | Patent family member(s) | | | Publication date (day/month/year) |
|---|---|---|---|---|---|---|---|
| CN | 108805185 | A | 13 November 2018 | None | | | |
| CN | 107784312 | A | 09 March 2018 | None | | | |
| CN | 105912500 | A | 31 August 2016 | CN | 105912500 | B | 14 November 2017 |
| | | | | WO | 2017166449 | A1 | 05 October 2017 |
| US | 8719191 | B2 | 06 May 2014 | US | 2011213737 | A1 | 01 September 2011 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2018105308229